# EUROPEAN PATENT APPLICATION

(11) **EP 2 519 045 A1**
(43) Date of publication of application: **31.10.2012**
(21) Application number: 11797542.5
(22) Date of filing: 18.05.2011
(51) Int. Cl.: H04W 16/18

(54) **METHOD AND SYSTEM FOR MANAGING NEIGHBORING CELL INFORMATION, RADIO NETWORK CONTROLLER AND USER EQUIPMENT THEREOF**

(30) Priority: 25.06.2010 CN 201010219134
(71) Applicant: ZTE Corporation, Shenzhen, Guangdong 518057 (CN)
(72) Inventor: HE, Meifang, Shenzhen Guangdong 518057 (CN); GAO, Yin, Shenzhen Guangdong 518057 (CN); CHEN, Zhongming, Shenzhen Guangdong 518057 (CN)
(74) Representative: Krauns, Christian
(86) International application number: PCT/CN2011/074215
(87) International publication number: WO 2011/160511

(57) **Abstract**

The present invention provides a method and system for managing neighbor cell information, a Radio Network Controller (RNC) and a User Equipment (UE). The RNC sends a measurement notification message carrying indication information_to_the UE; the UE measures the inter-frequency cells outside an inter-frequency neighbor cell list according to the indication information in the measurement notification message, obtains an inter-frequency measurement result and reports it to the RNC; and the RNC receives the inter-frequency measurement result, and updates the neighbor cell information of a maintenance system according to the inter-frequency measurement result. The present invention improves the capability of the network side acquiring the neighbor cell high-layer information of the user equipment, thus improving the capability of the system preventing calls from being dropped and the capability of the system maintaining the conversation continuity of the device.

## Description

### Technical Field

The present invention relates to the field of wireless communications, and in particular, to a method and system for managing neighbor cell information, a radio network controller and a user equipment.

### Background of the Related Art

Ensuring service continuity of a mobile user is a fundamental function of the cellular mobile communication system, and the switching of serving cells of a mobile station is the primary means of ensuring the service continuity. In order to facilitate the user equipment (UE for short) to switch, the system needs to configure a neighbor relation for each cell so that the network side notifies the user equipment of the neighbor cell information, after measuring the neighbor cells, the user equipment reports the measurement result, and the network side instructs the user equipment to implement switching to a certain neighbor cell.

What neighbor cells are around a certain cell is not only related to cell range, but also closely related to the wireless environment in which the cell is located. Due to the anfractuosity of the wireless environment, especially of urban surroundings where high-rise buildings are dense, at the early stage of network planning, it is very difficult to exactly judge what neighbor cells should be configured for a certain cell. Some factors, such as, a cell being newly added in the system or property of the cell changing but without updating the neighbor relation of the cell in time, the change of the environment, or omitting of the network planning personnel, etc., all can cause that the neighbor cell information cannot be updated timely. Therefore, it causes the user equipment cannot switch to other cells timely, which makes situations such as load of the present cell being too high, the signal quality of the present cell becoming worse, the interference becoming serious or user calls getting dropped and so on happen.

The cell information consists of cell physical layer information and cell high-layer information. The cell physical layer information is the primary scrambling code of the cell (referred to as the PSC), and in the network planning, the PSC is unique in a certain region. The cell high-layer information comprises two parts what are Public Land Mobile Network (PLMN for short) and Cell Identity (CID for short) in the PLMN, or three parts what are PLMN, the Route Area Identifier (RAI for short) and the Location Area Identifier (LAI for short), or four parts what are PLMN, RAI, LAI, and CID.

A virtual active set is a non-used frequency related active set considering event-triggered non-used frequency measurement, and it might use an intra-frequency measurement report event to support and maintain the active set. The inter-frequency neighbor cell list information consists of the virtual active set cells and the inter-frequency monitored set cells. The inter-frequency cells neither in the inter-frequency neighbor cell list nor in the virtual active set are called an inter-frequency detected set.

In order to configure the neighbor relation of a cell timely, the long term evolution (LTE) system presents that a neighbor cell list is added based on the Automatic Neighbor Relation (referred to as ANR) function. The ANR function is the function that auxiliarily measuring the physical layer information of a new cell through the user equipment and reporting it to the network side, being able to acquire the high-layer information of a specific cell from the user equipment, and the network side finish adding the neighbor cell list, which doesn't need to add the neighbor cells manually but finished automatically by the system.

For the problem of the missing configuration of the intra-frequency neighbor cells, the related art can resolve it through the measuring scheme of the detected set, when the user equipment reports the detected set report, and the cell detected by the user equipment has corresponding high-layer information at the network side, the network side can add the cells have been measured by the user equipment into the neighbor cell list existing configuration missing.

However, there is no corresponding solution for the problem of missing configuration of the inter-frequency neighbor cells in the related art.

### Summary of the Invention

The technical problem to be solved in the present invention is to provide a neighbor cell information management technology to solve the problem of missing configuration of the inter-frequency neighbor cells.

In order to solve the above technical problem, the present invention provides a method for managing neighbor cell information, comprising:
a radio network controller (RNC) sending a measurement notification message carrying indication information to a user equipment (UE);
the UE measuring inter-frequency cells outside an inter-frequency neighbor cell list according to the indication information in the measurement notification message and acquiring an inter-frequency measurement result and report the inter-frequency measurement result to the RNC; and
the RNC receiving the inter-frequency measurement result, updating neighbor information of a maintenance system according to the inter-frequency measurement result.

Preferably, the RNC judges whether a cell switching flow needs to be performed according to the inter-frequency measurement result.

Preferably, the method also comprises:
after receiving the inter-frequency measurement result, the RNC judging whether it needs to notify the UE to report high-layer information of the specific inter-frequency cells outside the inter-frequency neighbor cell list, if necessary, sending a specific cell notification message to the UE;
the UE implementing system message analysis on the specific inter-frequency cell according to the specific cell notification message, acquiring the high-layer information of the specific inter-frequency cell and reporting the high-layer information to the RNC;
the RNC updating the neighbor cell information according to the inter-frequency measurement result and the high-layer information of the specific inter-frequency cell.

Preferably, the specific cell notification message comprises the physical layer information of the specific inter-frequency cell.

Preferably, the specific cell notification message also comprises an indication unit for reporting the high-layer information of the specific inter-frequency cell; with the indication unit indicating to report the high-layer information of the specific inter-frequency cell according to the following measures:
reporting the unique cell identity (CID) in the Public Land Mobile Network (PLMN); or
reporting the PLMN and CID; or
reporting the PLMN, route area identifier (RAI) and location area identifier (LAI); or
reporting the PLMN, the RAI, the LAI and the CID.

Preferably, the method also comprises:
the RNC judging whether it needs to perform the cell switching flow according to the inter-frequency measurement result and the high-layer information of the specific inter-frequency cell.

Preferably, the measurement notification messages also comprises an information element for indicating the number of cells, the information element for indicating the number of cells is used to indicate the maximum number of inter-frequency cells to which the inter-frequency measurement result reported by the UE belongs.

Preferably, the indication information comprises the maximum number of the non-used frequency cells and/or the frequency information.

Preferably, the inter-frequency cells outside the inter-frequency neighbor cell list comprise at least one of the following cells:
cells within detected set on non-used frequency, cells within monitored set on non-used frequency and cells within virtual active set on non-used frequency.

Preferably, the physical quantities measured by the UE for the inter-frequency cells outside the inter-frequency neighbor cell list comprise at least one of the following physical quantities:
common pilot channel energy per chip noise ratio (CPICH Ec/N0), common pilot channel received signal code power (CPICH RSCP), primary common control physical channel received signal code power (CCPCH RSCP), as well as timeslot interference on signal code power pathloss, and so on.

Preferably, the inter-frequency measurement result comprises primary scrambling code of a neighbor cell that meets the event as well as the measurement related physical quantities that need to be reported in the measurement control.

Preferably, the measurement notification message also carries a reporting criteria;
the UE reports the inter-frequency measurement result to the RNC based on the reporting criteria.

Preferably, the reporting criteria comprise any one triggering event in the series one or series two, or periodic triggering reporting.

In order to solve the above technical problem, the present invention also provides a radio network controller, comprising a transmitting module, a receiving module and an updating module, wherein:
the transmitting module is configured to send a measurement notification message carrying indication information to a user equipment (UE);
the receiving module is configured to receive an inter-frequency measurement result obtained through measuring inter-frequency cells outside the inter-frequency neighbor cell list according to the indication information in the measurement notification message by the UE;
the updating module is configured to update neighbor cell information of a maintenance system according to the inter-frequency measurement result.

Preferably, the radio network controller also comprises:
a judgment module, which is configured to judge whether it needs to notify the UE to report the high-layer information of the specific inter-frequency cells outside the inter-frequency neighbor cell list after the receiving module receives the inter-frequency measurement result;
wherein,
the transmitting module is also configured to send a specific cell notification message to the UE when the judgment module decides that it needs to notify the UE to report the high-layer information of the specific inter-frequency cells outside the inter-frequency neighbor cell list;
the receiving module is also configured to receive the high-layer information of the specific inter-frequency cell acquired and reported by the UE according to the specific cell notification message.

In order to solve the above technical problem, the present invention also provides a user equipment, comprising a receiving module, a measurement module and a transmitting module, wherein:
the receiving module is configured to receive a measurement notification message carrying the indication information sent by a radio network controller (RNC);
the measurement module is configured to measure inter-frequency cells outside an inter-frequency neighbor cell list according to the indication information in the measurement notification message, and to acquire an inter-frequency measurement result;
the transmitting module is configured to report the inter-frequency measurement result to the RNC.

Preferably, the user equipment also comprises:
an acquisition module, which is configured to implement system message analysis on an specific inter-frequency cell outside the inter-frequency neighbor cell list according to the specific cell notification message sent by the RNC , and to acquire the high-layer information of the specific inter-frequency cell;
wherein,
the receiving module is also configured to receive the specific cell notification message;
the transmitting module is also configured to send the high-layer information of the specific inter-frequency cell to the RNC.

To solve the above technical problem, the present invention also provides a system for managing neighbor cell information, comprising: a radio network controller (RNC) and a user equipment (UE), wherein,
the RNC is configured to send a measurement notification message carrying the indication information to the UE, and to update neighbor cell information of a maintenance system according to an inter-frequency measurement result after receiving the inter-frequency measurement result acquired through measuring inter-frequency cells outside an inter-frequency neighbor cell list according to the indication information in the measurement notification messages by the UE;
the UE is configured to receive the measurement notification message sent by the RNC, and to measure the inter-frequency cells outside the inter-frequency neighbor cell list according to the indication information carried in the measurement notification message, and to acquire the inter-frequency measurement result and report the inter-frequency measurement result to the RNC.

Preferably, the RNC is also configured to judge whether it needs to notify the UE to report high-layer information of a specific inter-frequency cell outside the inter-frequency neighbor cell list after receiving the inter-frequency measurement result, if yes, to send a specific cell notification message to the UE;
the UE is also configured to implement system messages analysis on the specific inter-frequency cell outside the inter-frequency neighbor cell list after receiving the specific cell notification message, and to acquire the high-layer information of the specific inter-frequency cell and report the high-layer information to the RNC.

Compared with the related art, the embodiments of the present invention provide a method for managing inter-frequency neighbor cell information, a radio network controller and a user equipment, so improve the capability of the network side acquiring the neighbor cell high-layer information of the user equipment, and improve the capability of the system preventing calls from being dropped and the capability of the system maintaining the conversation continuity of the device.

### Brief Description of Drawings

FIG. 1 is a schematic diagram of flow of a method for managing the neighbor cell information in accordance with an embodiment of the present invention;
FIG. 2 is a schematic diagram of the composition of a radio network controller in accordance with an embodiment of the present invention;
FIG. 3 is a schematic diagram of the composition of a user equipment in accordance with an embodiment of the present invention;
FIG. 4 is a schematic diagram of the composition of a system for managing the neighbor cell information in accordance with an embodiment of the present invention.

### Preferred Embodiments of the Present Invention

The embodiments of the present invention will be described in detail in combination with the accompanying drawings and examples hereinafter, whereby the implementation process that how the present invention uses technical means to solve the technical problem and to achieve technical effect can be fully understood.

First, if not conflict, the examples of the present invention and each of features in the examples can be combined with each other, these combination are within the protection scope of the present invention. In addition, the steps shown in the flow chart of the accompanying drawings can be executed in a computer system such as a set of computer executable instructions, in addition, although the logical order is shown in the flowchart, in some cases, an order different from this one can be used to execute the steps have been shown or described.

In the technical scheme of the present invention, the radio network controller (RNC) sends a measurement notification message to the user equipment (UE), with the measurement notification message carrying a reporting criteria and indication information, wherein, the indication information is used to indicate the user equipment to implement measure and report on the inter-frequency cells outside the inter-frequency neighbor cell list, and the reporting criteria refers to the reporting criteria of reporting the inter-frequency cells outside the inter-frequency neighbor cell list for the user equipment. After receiving the notification message, the user equipment measures the inter-frequency cells outside the inter-frequency neighbor cell list indicated in the notification message and acquires the inter-frequency measurement result, then reports the inter-frequency measurement result according to the reporting criteria. If the RNC at the network side receives the inter-frequency measurement result and then finds out that the physical layer information of a certain inter-frequency cell outside the inter-frequency neighbor cell list does not have corresponding high-layer information, a specific cell notification message can be sent to notify the UE ,with the specific cell notification message carrying the physical information of this inter-frequency cell; after receiving the specific cell notification message, the user equipment analyzes the system message of this inter-frequency cell , acquire the high-layer information of this inter-frequency cell and report it to the RNC at the network side, the network side judges whether it needs to perform the cell switching flow (if yes, decides to switch target cell) according to the inter-frequency measurement result reported by the user equipment and the high-layer information of the specific inter-frequency cell, and updates the neighbor cell information of the maintenance system. If the network side discovers that it does not need the high-layer information of a certain inter-frequency cell outside the inter-frequency neighbor cell list after receiving the inter-frequency measurement result, it judges whether it needs to perform the cell switching flow (if yes, decides to switch target cell) according to the inter-frequency measurement result reported by the user equipment, and updates the neighbor cell information of the maintenance system.

Wherein, the indication information of implementing measuring and reporting for the inter-frequency cells outside the inter-frequency neighbor cell list comprises the maximum number of cells on the non-used frequency and/or the frequency information of the non-used frequency.

Wherein, the inter-frequency cells outside the inter-frequency neighbor cell list comprise one or more of the following cells:
cells within detected set on the non-used frequency, cells within monitored set on the non-used frequency and cells with virtual active set on the non-used frequency.

Wherein, the reporting criteria of reporting inter-frequency cells outside the inter-frequency neighbor cell list for the user equipment can be any one of the triggering events in the series 2 or the series 1, or can be the periodic triggering reporting.

When the specific cell notification message notifies the user equipment to acquire the high-layer information of a specific inter-frequency cell, besides the physical layer information of the specific inter-frequency cell, the specific cell notification message also carries the indication unit for reporting the high-layer information of the specific inter-frequency cell; the indication unit can indicate one of the following ways of reporting the high-layer information of the specific inter-frequency cell:
only reporting the CID; or
only reporting the PLMN and the CID; or
only reporting the PLMN, the RAI and the LAI; or
the PLMN, the RAI, the LAI and the CID all being reported.

The radio network controller judges the switching target cell of the user equipment according to the inter-frequency measurement result reported by the user equipment or the inter-frequency measurement result and the high-layer information of the specific inter-frequency cell, and updates the neighbor cell information maintained by the system according to the inter-frequency measurement result reported by the user equipment or the inter-frequency measurement result and the high-layer information of the specific inter-frequency cell.

Embodiment One, a method for managing the neighbor cell information

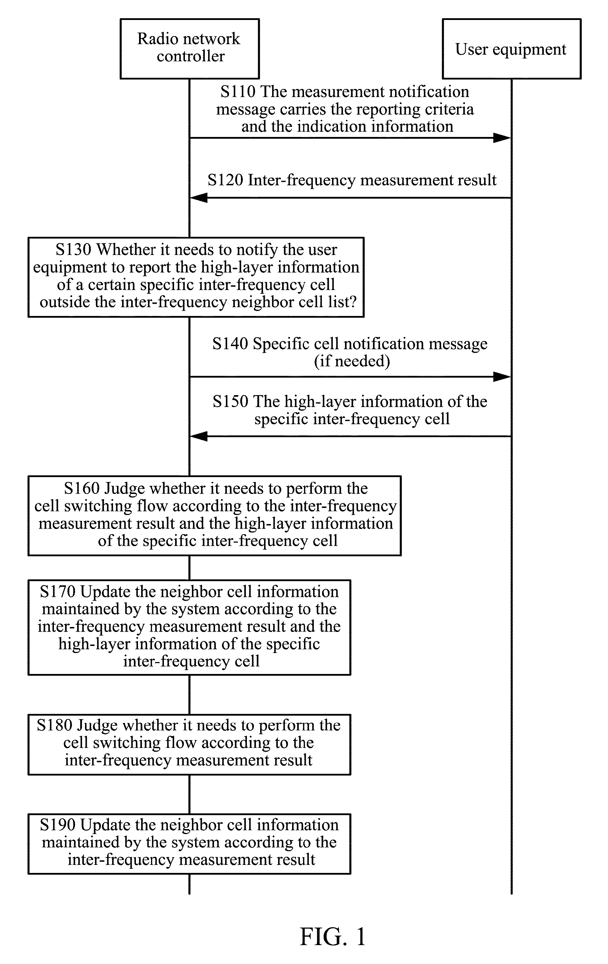

As shown in FIG. 1, the present embodiment mainly comprises the following steps:
in step S110, the radio network controller sends a measurement notification message to the user equipment, with the measurement notification message carrying the reporting criteria and the indication information;
wherein, the indication information is used to instruct the user equipment to implement measure and report on the inter-frequency cells outside the inter-frequency neighbor cell list;
wherein, the reporting criteria is used to instruct the user equipment to report the criteria of the inter-frequency cells outside the inter-frequency neighbor cell list;
the measurement notification message sent by the network side can be a downlink message, such as a system broadcast message, a measurement control message or other downlink messages;
in step S120, after receiving the measurement notification message, the user equipment measures the inter-frequency cells outside the inter-frequency neighbor cell list , acquires the inter-frequency measurement result and report the inter-frequency measurement result according to the reporting criteria in the measurement notification message.

When the user equipment measures the inter-frequency cells outside the inter-frequency neighbor cell list, the physical quantities will be measured can be one or more of the following physical quantities:
the common pilot channel energy per chip noise ratio (CPICH Ec/N0), the common pilot channel received signal code power (CPICH RSCP), the primary common control physical channel received signal code power (CCPCH RSCP), as well as the timeslot interference on signal code power pathloss, and so on.
the inter-frequency measurement result acquired by the user equipment comprises primary scrambling codes of the neighbor cells that meet the event as well as the measurement related physical quantities that need to be reported in the measurement control.
in step S130, after receiving the inter-frequency measurement result reported by the user equipment, the radio network controller judges whether it needs to notify the user equipment to report the high-layer information of a specific inter-frequency cell outside the inter-frequency neighbor cell list, if needs, it proceeds to step S 140, otherwise, it goes to step S 180;
in step S 140, the radio network controller sends a specific cell notification message to the user equipment, with the specific cell notification message carrying the physical information of the specific inter-frequency cell;
wherein, the specific cell notification message also carries the high-layer information unit indicating to report the cell; the high-layer information unit of the specific inter-frequency cell can indicate one of the following reporting methods:
   only reporting the CID; or
   only reporting the PLMN and the CID; or
   only reporting the PLMN, the RAI and the LAI; or
   the PLMN, the RAI, the LAI and the CID being all reported.

The specific cell notification message sent by the network side can be a downlink message, such as a system broadcast message, a measurement control message or other downlink messages;
in step S150, after receiving this specific cell notification message, the user equipment analyzes the system message of this specific inter-frequency cell, acquires the high-layer information of the specific inter-frequency cell, and reports the high-layer information of the specific inter-frequency cell to the network side;
in step S160, the radio network controller judges whether it needs to perform the cell switching flow according to the inter-frequency measurement result and the high-layer information of the specific inter-frequency cell reported by the user equipment, and decides the switching target cell of the user equipment if necessary, which can make the user equipment be able to switch in time and effectively prevent calls from being dropped; then it proceeds to step S170;
in step S 170, the radio network controller updates the neighbor cell information maintained by the system according to the inter-frequency measurement result and the high-layer information of the specific inter-frequency cell reported by said user equipment, then the flow is over.
in Step S180, the radio network controller judges whether it needs to perform the cell switching flow according to the inter-frequency measurement result reported by the user equipment, and decides the switching target cell of the user equipment if needed, which can make the user equipment be able to switch timely and effectively prevent calls from being dropped; then it proceeds to step S 190;
in step S 190, the radio network controller updates the neighbor cell information maintained by the system according to the inter-frequency measurement result reported by the user equipment, then the flow is over.
in step S110, the indication information can be the "reporting cell status" information element contained in the measurement notification message, this information element indicates that the inter-frequency cells outside the inter-frequency neighbor cell list can be one or more of the following cells:
the cells within detected set on non-used frequency, the cells within monitored set on non-used frequency and the cells within virtual active set on non-used frequency. This information element can comprise the corresponding non-used frequency information to reduce the searching event of terminals and to produce power saving effect.

The reporting criteria can be the triggering condition information element contained in the measurement notification message, the triggering condition cells are set as cells within the detected set, or cells within the detected set and cells within the monitored set, or cells within the detected set, cells within the monitored set and cells within the virtual active set, thus limiting these cell triggering events and/or the periodic triggering reporting.

The measurement notification message can also comprise an information element for indicating the number of cells, and the information element is used to indicate the maximum number of cells on non-used frequency to which the inter-frequency measurement result reported by the UE belongs.

Practical Application One

A practical application of the above embodiment is the case that the inter-frequency cell has specific cell information to report.

In the above step S110,
the measurement notification message sent by the radio network controller to the user equipment comprises "reporting cell status" information element, this information element is configured with the indication element for implementing measuring and reporting on the inter-frequency cells outside the inter-frequency neighbor cell list, that is, report cells within detected set on non-used frequency indication element, and the specific format is shown in Table 1.

**Table 1 Report cells within detected the set on non-used frequency indication element**

| | | | | |
|---|---|---|---|---|
| >Report cells within detected set on non-used frequency | | | | This choice is not valid for intra-frequency or inter-RAT measurements |
| >>Maximum number of reported cells per reported non-used frequency | MP | | Integer(1.. 6) | |
| >>Frequency info | OP | | Frequency info 10.3.6.36 | |

In order to save the electric power of the UE, the number of inter-frequency cells that should be reported by the UE can be controlled, for example, an information element for indicating the number of cells is added to indicate the maximum number of inter-frequency cells to which the inter-frequency measurement result in the report message (the message contains the above inter-frequency measurement result) of the user equipment belongs, which can be one or more. The number of information elements for indicating the number of cells filled in the present practical application is 5. The information element comprises an corresponding non-used frequency information optional information element ,that is, Frequency info.

The reporting criteria in the measurement notification message can be a triggering condition information element Triggering condition 4, the triggering cells are set as cells within the detected set, or cells within the detected set cell and the virtual active set, or the cells within the detected set and the monitored set, or the cells within the detected cell, the cells within the virtual active set and the cells within the monitored set, the triggering event is limited as la, and the specific format is shown in Table 2.

**Table2 Triggering condition information element**

| | | | | | |
|---|---|---|---|---|---|
| >Triggering condition 4 | OP | | Enumerat ed(Detect ed set cells, Detected set cells and Virtual Active set cells , Detected set cells and monitore d set cells, Detected set cells and monitore d set cells and Virtual Active set cells) | Indicates which cells can trigger the event. The IE is mandatory present if the IE "Inter-frequency event identity" is set to "1a", otherwise the IE is not needed. | REL-10 |

In the above step S 120,
the UE acquires that the reporting method is event reporting through the measurement notification message, compares the inter-frequency measurement result with a preset event threshold, reports the inter-frequency measurement result to the network side when the inter-frequency measurement result is lower than the event threshold (or higher than the event threshold), wherein, the inter-frequency measurement result can be an event result, also can be the event result appended the measured physical quantities.

When the UE uses the event la method to report, the value used for the ANR event threshold and the value used for the switching event threshold can be the same or different. If the value used for the ANRF event threshold and the value used for the switching event threshold are the same, it can be required to report both the event for the switching and the event for ANRF in the same monitoring control message; if it is required that the event thresholds are different, it can report in the next monitoring control message for the ANRF.

The physical quantities measured by the UE can comprise the common pilot channel energy per chip noise ratio (CPICH Ec/N0), the common pilot channel received signal code power (CPICH RSCP), the primary common control physical channel received signal code power (CCPCH RSCP), the timeslot interference on signal code power pathloss and so on.

In the above step S130,
the RNC receives the inter-frequency measurement result reported by the UE, decides that there is the high-layer information of a specific inter-frequency cell needs to be reported by the UE, the RNC sends the specific cell notification message to the UE in step S140, with the specific cell notification message carrying the physical layer information of this specific inter-frequency cell.

The specific cell notification message also contains the high-layer information units indicating to report the specific inter-frequency cell, and the high-layer information units of these inter-frequency cells can indicate to only report the corresponding PLMN and CID.

This specific cell notification message can be a system broadcast message, or a measurement control message and other downlink messages.

If it is a measurement control message, an Inter-frequency SI Acquisition information element can be reused, the specific structure is shown in Table 3, wherein, the second-order information element Inter-frequency SI acquisition Info information element in the first-order information element frequency division multiplexing mode (FDD) contains the frequency information element and the primary scrambling code information element, also contains the optional item of high-layer information unit indicating to report the cell so as to report the PLMN, the RAI and the LAL.

**Table3 Inter-frequency SI Acquisition information element**

| **Information Element/Group name** | **Need** | **Multi** | **Type and reference** | **Semantics description** | **Version** |
|---|---|---|---|---|---|
| Frequency info | MP | | Frequency info 10.3.6.36 | | REL-9 |
| CHOICE *mode* | MP | | | | REL-9 |
| >FDD | | | | | REL-9 |
| >>Primary Scrambling Code | MP | | Primary CPICH info 10.3.6.60 | | REL-9 |
| CSG identity report | OP | | Enumerated (required) | The CSG identity shall not be reported if this IE is not present | REL-9 |
| PLMN report | OP | | Enumerated (required) | The PLMN shall not be support if this IE is not present | REL-10 |
| LAC report | OP | | Enumerated (required) | The LAC shall not be support if this IE is not present | REL-10 |
| RAC report | OP | | Enumerated (required) | The RAC shall not be support if this IE is not present | REL-10 |

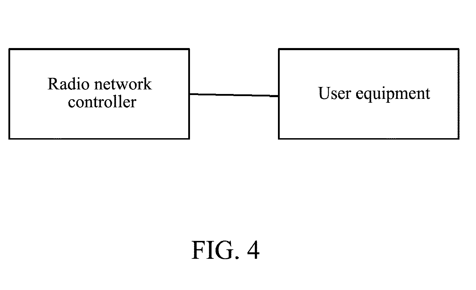

In step S150,
after receiving this specific cell notification message, the user equipment implements system message analysis for this specific inter-frequency cell notified in the specific cell notification message, acquires the high-layer information of the specific inter-frequency cell ,and reports the high-layer information of the specific inter-frequency cell to the network side through the cell measurement result information element in the measurement report message (that is, the message comprising the high-layer information of the specific inter-frequency cell), the specific structure of the specific cell measurement result information element is shown in FIG. 4.

**Table 4 Cell measurement result information element**

| **Information Element/Group name** | **Need** | **Multi** | **Type and reference** | **Semantics description** | **Version** |
|---|---|---|---|---|---|
| Cell Identity | OP | | Cell Identity 10.3.2.2 | | |
| PLMN | OP | | | | |
| LAC | OP | | | | |
| RAC | OP | | | | |
| CSG Identity | CV-CS G | | CSG Identity 10.3.2.8 | | REL-9 |
| CSG Member indication | CV-CS G | | Enumerated(member) | | REL-9 |
| Cell synchronisation information | OP | | Cell synchronisation information 10.3.7.6 | | |
| CHOICE *mode* | MP | | | | |
| >FDD | | | | | |
| >>Primary CPICH info | MP | | Primary CPICH info 10.3.6.6 0 | | |
| >>CPICH Ec/N0 | OP | | Integer( 0..49) | According to CPICH_Ec/No in [19] and [20]. Fourteen spare values are needed. | |
| >>CPICH RSCP | OP | | Integer( 0..91) | According to CPICH_RSCP in [19] and [20]. Thirty-six spare values are needed. | |
| >>Deltac_{PICH RSCP} | CV-RS CP | | Integer( -5..-1) | If present, the actual value of CPICH RSCP = CPICH RSCP+ Delta_{CPICH RSCP} | REL-5 |
| >>Pathloss | OP | | Integer( 46..158) | In dB. Fifteen spare values are needed. | |
| >TDD | | | | | |
| >>Cell parameters | MP | | Cell | | |
| Id | | | paramet ers Id 10.3.6.9 | | |
| >>Proposed TGSN | OP | | Integer (0..14) | Proposal for the next TGSN | |
| >>Primary CCPCH RSCP | OP | | Primary CCPCH RSCP info 10.3.7.5 4 | | |
| >>Pathloss | OP | | Integer( 46..158) | In dB. Fifteen spare values are needed. | |
| >>Timeslot list | OP | 1 to < maxTS > | | | |
| >>>Timeslot ISCP | MP | | Timeslot ISCP Info 10.3.7.6 5 | The UE shall report the Timeslot ISCP in the same order as indicated in the cell info | |

In the above step S160, the RNC judges whether the cell switching flow should be performed according to the received inter-frequency measurement result and the high-layer information of the specific inter-frequency cell reported by the UE; in step S170, the inter-frequency neighbor cell is updated according to the inter-frequency measurement result and the high-layer information of the specific inter-frequency cell have been received, and the update result is sent to the self-organized network or network management, and the inter-frequency neighbor cell implement upadte automatically.

Practical application Two

It's another practical application of the above embodiment, and the case that the inter-frequency cell has no specific cell information to report.

In the above step S110,
the measurement notification message sent by the radio network controller to the user equipment comprises the "reporting cell status" information element, this information element is configured with the indication information element for implementing measuring and reporting on inter-frequency cells outside the inter-frequency neighbor cell list, that is, report cells within detected set and virtual active set on non-used frequency indication information element, the specific format is shown in Table 5.

**Table 5 Report cells within detected set and virtual active set on non-used frequency indication element cell**

| | | | | |
|---|---|---|---|---|
| >Report cells within detected set and virtual active set on non-used frequency | | | | This choice is not valid for intra-frequency or inter-RAT measurements |
| >>Maximum number of reported cells per reported non-used frequency | MP | | Integer(1.. 6) | |

The reporting criteria in the measurement notification message can be a triggering condition information element, the triggering cells are set as cells within the detected set and cells within the virtual active set, and the triggering of these cells is limited as periodic triggering.

In the above step S120,
the UE acquires that the reporting method is periodic reporting through the reporting criteria in the measurement notification message, and periodically reports the inter-frequency measurement result to the network side, with the inter-frequency measurement result comprising the measured physical quantities and the physical layer information of a corresponding cell.

The measured physical quantities can be the common pilot channel energy per chip noise ratio (CPICH Ec/N0), the common pilot channel received signal code power (CPICH RSCP), the primary common control physical channel received signal code power (CCPCH RSCP), the timeslot interference on signal code power pathloss and so on.

In the above step S130,
after receiving the inter-frequency measurement result reported by the UE, the RNC decides that there is no high-layer information of a specific inter-frequency cell to be reported by the UE, then in step S180, judges whether a cell switching flow needs to be performed according to the received inter-frequency measurement result; and in step S190, implements updates on the inter-frequency neighbor cells according to the received inter-frequency measurement result, sends the update result to the self-organized network or network management, and the inter-frequency neighbor cells implement update automatically.

The above method is applicable in the second generation (2G) mobile communication system or the third-generation (3G) mobile communication system, and including but not limited to such as Wideband Code Division Multiple Access (WCDMA) systems and Time Division Synchronous Code Division Multiple Access (TD-SCDMA) systems in the 3G mobile communications systems.

Embodiment Two, a radio network controller

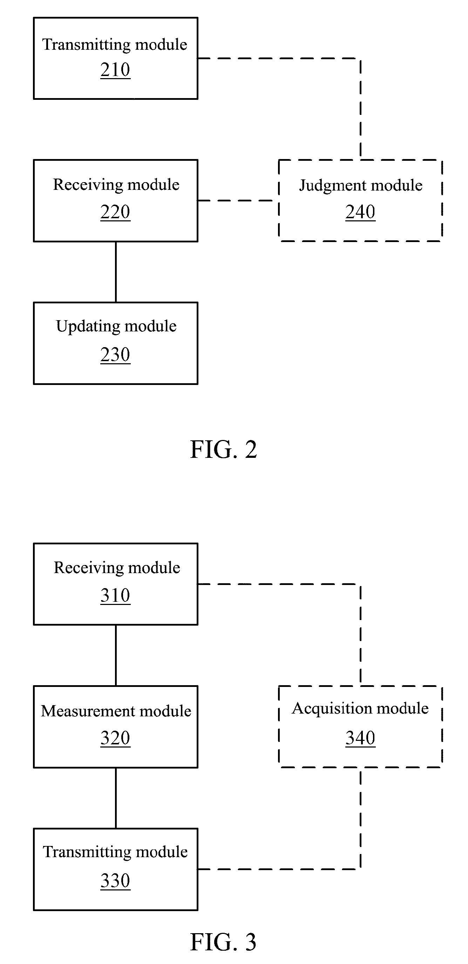

As shown in FIG. 2, the embodiment mainly comprises a transmitting module 210, a receiving module 220 and an updating module 230, wherein:
the transmitting module 210 is used to send a measurement notification message carrying an indication information to the user equipment (UE);
the receiving module 220 is used to receive an inter-frequency measurement result obtained through measuring the inter-frequency cells outside the inter-frequency neighbor cell list according to the indication information in the measurement notification message by the UE;
the updating module 230 is connected with the receiving module 220 and is used to update the neighbor cell information of the maintenance system according to the inter-frequency measurement result.

As shown in FIG. 2, the present embodiment can also further comprise a judgment module 240, wherein, the judgment module 240 is connected with the transmitting module 320 and the receiving module 220, and is used to judge whether it needs to notify the user equipment to report the high-layer information of a specific inter-frequency cell outside the inter-frequency neighbor cell list after the receiving module 220 receives the inter-frequency measurement result;
the transmitting module 210 is further used to send the specific cell notification message to the UE when the judgment module 240 determines that it needs to notify the user equipment to report the high-layer information of the specific inter-frequency cells outside the inter-frequency neighbor cell list;
the receiving module 220 is further used to receive the high-layer information of the inter-frequency cell acquired and reported by the UE according to the specific cell notification message.

Embodiment Three: a user equipment

As shown in FIG. 3, the present embodiment mainly comprises a receiving module 310, a measurement module 320 and a transmitting module 330, wherein:
the receiving module 310 is used to receive a measurement notification message carrying an indication information sent by the radio network controller (RNC);
the measurement module 320 is connected with the receiving module 310 and is used to measure the inter-frequency cells outside an inter-frequency neighbor cell list according to the indication information in the measurement notification message, and to acquire an inter-frequency measurement result;
the transmitting module 330 is connected with the measurement module 320 and is used to report the inter-frequency measurement result to the RNC for the user.

As shown in FIG. 3, the present embodiment can also further comprise an acquisition module 340, wherein, the acquisition module 340 is connected with the receiving module 310 and the transmitting module 320 and is used to implement system messages analysis on the specific inter-frequency cells outside the inter-frequency neighbor cell list according to the specific cell notification message sent by the RNC and to acquire a high-layer information of the specific inter-frequency cells;
wherein,
the receiving module 310 is further used to receive the specific cell notification message;
the transmitting module 330 is further used to send the high-layer information of the specific cell inter-frequency cell to the RNC.

The above Embodiment Two and Embodiment Three can be understood in combination with the contents of Embodiment One.

Embodiment Four: a system for managing neighbor cell information

As shown in FIG. 4, the present embodiment mainly comprises a radio network controller (RNC) and a user equipment (UE), wherein,
the RNC is used to send a measurement notification message carrying the indication information to the UE, and to update the neighbor cell information of the maintenance system after receiving the inter-frequency measurement result acquired through measuring the inter-frequency cells outside the inter-frequency neighbor cell list according to the indication information in the measurement notification message by the UE;
the UE is used to receive the measurement notification message sent by the RNC, and to measure the inter-frequency cells outside the inter-frequency neighbor cell list according to the indication information carried in the measurement notification message and to acquire and report the inter-frequency measurement result to the RNC.

After receiving the inter-frequency measurement result, the RNC also further judges whether it needs to notify the UE to report the high-layer information of the specific inter-frequency cells outside the inter-frequency neighbor cell list , if needed, sends a specific cell notification message to the UE;

After receiving the specific cell notification message, the UE implements system message analysis on a specific inter-frequency cell outside the inter-frequency neighbor cell list, acquires the high-layer information of the specific inter-frequency cell and reports it to the RNC.

The above description is only the preferred embodiments of the present invention, is not intended to limit the present invention, and for those skilled in the field, the present invention can have a variety of changes and modifications. Any change, equivalent replacement and improvement made within the spirit and principles of the present invention should be included within the protection scope of the present invention.

### Industrial Applicability

Applying a method for managing inter-frequency neighbor cell information, a radio network controller and a user equipment provided by the present invention, it improves the capability of the network side acquiring the neighbor cell high-layer information of the user equipment, and improves the capability of the system preventing calls from being dropped and the capability of the system maintaining the conversation continuity of the device.

## Claims

1. A method for managing neighbor cell information, comprising:
a radio network controller (RNC) sending a measurement notification message carrying indication information to a user equipment (UE);
the UE measuring inter-frequency cells outside an inter-frequency neighbor cell list according to the indication information in the measurement notification message and acquiring an inter-frequency measurement result and report the inter-frequency measurement result to the RNC; and
the RNC receiving the inter-frequency measurement result, updating neighbor information of a maintenance system according to the inter-frequency measurement result.

2. The method according to claim 1, further comprising:
the RNC judging whether a cell switching flow needs to be performed according to the inter-frequency measurement result.

3. The method according to claim 1, further comprising:
after receiving the inter-frequency measurement result, the RNC judging whether notifying the UE to report high-layer information of specific inter-frequency cells outside the inter-frequency neighbor cell list is required, if yes, sending a specific cell notification message to the UE;
the UE implementing a system message analysis on the specific inter-frequency cells according to the specific cell notification message, acquiring the high-layer information of the specific inter-frequency cells and reporting the high-layer information to the RNC; and
the RNC updating the neighbor cell information according to the inter-frequency measurement result and the high-layer information of the specific inter-frequency cells.

4. The method according to claim 3, wherein,
the specific cell notification message comprises physical layer information of the specific inter-frequency cells.

5. The method according to claim 4, wherein,
the specific cell notification message further comprises an indication unit for reporting the high-layer information of the specific inter-frequency cells, and the indication unit indicates that the high-layer information of the specific inter-frequency cells is reported according to following measures:
reporting a cell identity (CID) in Public Land Mobile Network (PLMN); or
reporting the PLMN and CID; or
reporting the PLMN, route area identifier (RAI) and location area identifier (LAI); or
reporting the PLMN, the RAI, the LAI and the CID.

6. The method according to claim 3, further comprising:
the RNC judging whether performing a cell switching flow is required according to the inter-frequency measurement result and the high-layer information of the specific inter-frequency cells.

7. The method according to claim 1 or 3, wherein:
the measurement notification messages further comprises an information element for indicating the number of cells, and the information element for indicating the number of cells is used to indicate the maximum number of inter-frequency cells to which the inter-frequency measurement result reported by the UE belongs.

8. The method according to claim 1 or 3, wherein:
the indication information comprises the maximum number of non-used frequency cells and/or frequency information.

9. The method according to claim 1 or 3, wherein:
the inter-frequency cells outside the inter-frequency neighbor cell list comprise at least one of following cells:
cells within detected set on non-used frequency, cells within monitored set on non-used frequency and cells within virtual active set on non-used frequency.

10. The method according to claim 1 or 3, wherein:
physical quantities measured by the UE for the inter-frequency cells outside the inter-frequency neighbor cell list comprise at least one of following physical quantities:
common pilot channel energy per chip noise ratio, common pilot channel received signal code power, primary common control physical channel received signal code power as well as timeslot interference on signal code power pathloss.

11. The method according to claim 1 or 3, wherein:
the inter-frequency measurement result comprises a primary scrambling code of a neighbor cell that meets an event as well as measurement related physical quantities that need to be reported in a measurement control.

12. The method according to claim 1, wherein:
the measurement notification message further carries a reporting criteria;
the UE reports the inter-frequency measurement result to the RNC based on the reporting criteria.

13. The method according to claim 12, wherein:
the reporting criteria comprise any one triggering event in series one or series two, or periodic triggering reporting.

14. A radio network controller, comprising a transmitting module, a receiving module and an updating module, wherein:
the transmitting module is configured to send a measurement notification message carrying indication information to a user equipment (UE);
the receiving module is configured to receive an inter-frequency measurement result obtained through the UE measuring inter-frequency cells outside an inter-frequency neighbor cell list according to the indication information in the measurement notification message;
the updating module is configured to update neighbor cell information of a maintenance system according to the inter-frequency measurement result.

15. The radio network controller according to claim 14, further comprising:
a judgment module, which is configured to judge whether notifying the UE to report high-layer information of specific inter-frequency cells outside the inter-frequency neighbor cell list is required after the receiving module receives the inter-frequency measurement result;
wherein,
the transmitting module is further configured to send a specific cell notification message to the UE when the judgment module decides that notifying the UE to report the high-layer information of the specific inter-frequency cells outside the inter-frequency neighbor cell list is required;
the receiving module is further configured to receive the high-layer information of the specific inter-frequency cell acquired and reported by the UE according to the specific cell notification message.

16. A user equipment, comprising a receiving module, a measurement module and a transmitting module, wherein:
the receiving module is configured to receive a measurement notification message carrying indication information sent by a radio network controller (RNC);
the measurement module is configured to measure inter-frequency cells outside an inter-frequency neighbor cell list according to the indication information in the measurement notification message, and to acquire an inter-frequency measurement result;
the transmitting module is configured to report the inter-frequency measurement result to the RNC.

17. The user equipment according to claim 16, further comprising:
an acquisition module, which is configured to implement a system message analysis on an specific inter-frequency cell outside the inter-frequency neighbor cell list according to a specific cell notification message sent by the RNC, and to acquire high-layer information of the specific inter-frequency cell;
wherein,
the receiving module is further configured to receive the specific cell notification message;
the transmitting module is further configured to send the high-layer information of the specific inter-frequency cell to the RNC.

18. A system for managing neighbor cell information, comprising: a radio network controller (RNC) and a user equipment (UE), wherein,
the RNC is configured to send a measurement notification message carrying indication information to the UE, and to update neighbor cell information of a maintenance system according to an inter-frequency measurement result after receiving the inter-frequency measurement result acquired through the UE measuring inter-frequency cells outside an inter-frequency neighbor cell list according to the indication information in the measurement notification messages;
the UE is configured to receive the measurement notification message sent by the RNC, to measure the inter-frequency cells outside the inter-frequency neighbor cell list according to the indication information carried in the measurement notification message, and to acquire the inter-frequency measurement result and report the inter-frequency measurement result to the RNC.

19. The system according to claim 18, wherein:
the RNC is further configured to judge whether notifying the UE to report high-layer information of a specific inter-frequency cell outside the inter-frequency neighbor cell list after receiving the inter-frequency measurement result is required, if yes, to send a specific cell notification message to the UE;
the UE is further configured to implement a system messages analysis on the specific inter-frequency cell outside the inter-frequency neighbor cell list after receiving the specific cell notification message, and to acquire the high-layer information of the specific inter-frequency cell and report the high-layer information to the RNC.
